# EUROPÄISCHE PATENTSCHRIFT

(11) **EP 2 594 538 B1**
(45) Veröffentlichungstag und Bekanntmachung des Hinweises auf die Patenterteilung: **26.07.2017**
(21) Anmeldenummer: 12193137.2
(22) Anmeldetag: 19.11.2012
(51) Int. Cl.: C03C 23/00, C03C 15/00, C03C 21/00

(54) **Verfahren zur Ausbildung einer Diffusionssperrschicht an einer Glasoberfläche und entsprechend behandeltes Glassubstrat**
Method for forming a diffusion barrier layer on a glass surface and such treated glass substrate
Procédé de formation d'une couche barrière de diffusion sur une surface en verre et substrat en verre ainsi traité

(30) Priorität: 17.11.2011 DE 102011086563
(43) Veröffentlichungstag der Anmeldung: 22.05.2013
(73) Patentinhaber: INTERPANE Entwicklungs-und Beratungsgesellschaft mbH, 37697 Lauenförde (DE)
(72) Erfinder: Kappertz, Oliver, Dr., 33098 Paderborn (DE); Herlitze, Lothar, Dr., 37691 Derental (DE); Hönoch, Kirsten, 34385 Bad Karlshafen (DE)
(74) Vertreter: Körfer, Thomas

(56) Entgegenhaltungen:
- EP-A1- 0 837 345
- GB-A- 2 206 878
- JP-A- 2010 180 093
- US-A- 5 804 317
- US-A1- 2011 079 931

## Beschreibung

Die Erfindung bezieht sich auf ein Verfahren zur Ausbildung einer Diffusionssperrschicht an einer Oberfläche eines Glassubstrats und auf ein entsprechendes behandeltes Glassubstrat. Dieses ist z.B. für eine Dünnschichtsolarzelle mit einer entsprechenden Diffusionssperrschicht einsetzbar.

Glas, insbesondere Flachglas, wird häufig durch eine Beschichtung der Oberfläche vergütet und weist entsprechend der gewählten Beschichtung unterschiedliche Funktionen auf. Zum Beispiel erhält ein Glassubstrat eine wärmeisolierende Eigenschaft, wenn es mit einem metallischen Material, insbesondere Silber, dünn beschichtet ist. Auch Dünnschichtsolarzellen, die zur Stromgewinnung aus Sonnenlicht verwendet werden, haben häufig auf ein Glassubstrat als Träger, auf dem ein Schichtsystem mit einer leitfähige Schicht als Rückkontakt, einer Absorberschicht und einer weiteren leitfähigen Beschichtung als Frontkontakt, aufgebracht ist.

Flachglas, insbesondere das häufig verwendete Kalknatronglas, enthält Alkali- und Erdalkaliionen, die in die angrenzenden Schichten diffundieren. Dadurch werden diese angrenzenden Schichten häufig in ihrer Funktionsweise gestört. Um diese Diffusion zwischen Substratoberfläche und Beschichtung zu verhindern, wird eine Diffusionssperrschicht auf die Substratoberfläche aufgebracht, die die störenden Alkaliionen am Weiterwandern in die darüber liegenden Schichten hindert.

Eine solche Diffusionssperrschicht wird z.B. in der WO 2010/039880 A1 beschrieben. Die Diffusionssperrschicht wird aus Siliciumoxid, Aluminiumoxid, Titan-Siliciumnitrit, Titanoxid oder Zirkonoxid oder einer Kombination aus den Stoffen gebildet und durch ein Sputterverfahren mit einer Schichtdicke von etwa 200 Å auf das Glassubstrat aufgebracht. Über dieser Diffusionssperrschicht werden dann die weiteren Funktionsschichten ausgebildet.

An der Grenzschicht zwischen Glas und atmosphärischer Umgebung bildet sich eine etwa 50 nm dicke Gelschicht aus. Diese Gelschicht wird insbesondere durch die Anlagerung von Wasser aus der umgebenden Luft gebildet. Dabei werden die Wassermoleküle einerseits chemisorbiert und bilden OH-Gruppen mit der darunterliegenden Siliciumoxid Struktur aus. An diese OH-Gruppen lagern sich wiederum Wassermoleküle an, die über Wasserstoffbrückenbindungen gekoppelt sind. Die in dem oberflächennahen Bereich des Glases gebundenen Alkaliionen wandern ebenfalls in diese Gelschicht. Im Gegenzug diffundieren Hydronium-Ionen (H₃O⁺) oder Protonen (H+) in das Glas und besetzen die freigewordenen Plätze der Alkaliionen.

Da das Aufbringen der Diffusionsschicht die Prozessdauer der Beschichtung als Ganzes verlängert, sowie Material- und Energie-aufwändig ist, ist es die Aufgabe der Erfindung, ein Verfahren zu schaffen, bei dem die Ionendiffusion durch eine Modifizierung der oberflächennahen Zone des Glassubstrats selbst signifikant reduziert wird. Das Verfahren soll dabei direkt im Anschluss an den Herstellungsprozess des Glassubstrats oder aber vor der Beschichtung und Weiterverarbeitung von fertigen Glassubstraten einsetzbar sein. Die erzeugte Ionen-Diffusionssperrschicht soll dabei energieeffizient und somit kostengünstig erzeugt werden können.

Die US 2011/0079931 A1 beschreibt Techniken zur Verhinderung von Schädigungen an optischen Komponenten, die von Lichtquellen mit hoher Intensität verursacht werden können. Ein derartiges Verfahren kann unter anderem umfassen, dass die optische Komponente einer wässrigen Lösung ausgesetzt wird, die eine Säure enthält. Die Lösung einschließlich der optischen Komponente wird sodann aufgeheizt.

Die EP 0 837 345 A1 beschreibt Verfahren zur Herstellung einer optischen Komponente mit erhöhter Durchlässigkeit im ultravioletten Spektralbereich. Bei einem derartigen Verfahren wird ein Vorläuferteil der Komponente einer Säurebehandlung unterzogen. Anschließend wird das Teil einer Wärmebehandlung bei einer Temperatur zwischen 100 und 900 ° C unterzogen.

Die US 5 804 317 A beschreibt Verfahren zur Verstärkung eines Glasobjektes. Nach einer Vorverdichtung der Oberfläche des Objekts wird die Oberfläche mit einer Säure geätzt. Danach erfolgt eine thermische Abschlussbehandlung zum Schutz der geätzten Oberfläche.

Die GB 2 206 878 A beschreibt Verfahren zur Herstellung pyrolytisch beschichteter Flachglasprodukte. Hierbei wird das Flachglas vor der Beschichtung einer entalkalisierenden Behandlung unterworfen, indem es einer ein saures Gas wie Schwefeltrioxid enthaltenden Atmosphäre ausgesetzt wird. Das Glass wird einer Temperatur oberhalb 200°C ausgesetzt. Nach einer gewissen Zeitspanne wird das entalkalisierte Glas gewaschen, erneut erhitzt und bei hoher Temperatur mit einem Beschichtungsvorläufermaterial kontaktiert, welches pyrolytisch im Kontakt mit dem Glas reagiert und so eine pyrolytische Beschichtung bildet.

Die JP 2010/180093 A lehrt, dass ein Glas oberflächlich mit Hilfe eines Lesers erwärmt wird. Dabei beträgt in dem angegebenen Beispiel die Eindringtiefe 20 bis 30 µm.

Die Aufgabe wird durch das erfindungsgemäße Verfahren gemäß Anspruch 1 gelöst. In den Unteransprüchen sind vorteilhafte Weiterbildungen des erfindungsgemäßen Verfahrens dargestellt.

Das erfindungsgemäße Verfahren zur Ausbildung einer Ionen-Diffusionssperrschicht in einer Oberfläche eines Glassubstrats weist als ersten Verfahrensschritt das Aufbringen einer Säure auf die Substratoberfläche auf. Anschließend wird die Substratoberfläche einer Temperaturbehandlung unterzogen.

Durch das Aufbringen der Säure auf die Substratoberfläche wird in der mikroskopisch dünnen Gelschicht des Glassubstrats der Anteil an Hydronium-Ionen (H₃O⁺) bzw. Protonen (H⁺) erhöht. Die im oberflächennahen Bereich des Glassubstrats eingelagerten Ionen, insbesondere Alkali- und Erdalkaliionen, sind nur schwach an die Siliciumstruktur gebunden und werden vermehrt durch die H⁺ bzw. H₃O⁺-Ionen ersetzt, sodass sich Silanolgruppen bilden. Die Ionen aus dem Glassubstrat werden im Gegenzug in der Säure gebunden. Es kommt somit zu einer schnellen Reduktion der Alkali- und Erdalkaliionen-Konzentration in der oberflächennahen Schicht des Glassubstrats.

Durch eine anschließende Wärmebehandlung der Substratoberfläche werden die Silanolgruppen kondensiert und das gebundene Hydroniumion bzw. die Protonen in Form von Wasser abgeschieden. Es kommt zu einer Ausheilung und Verdichtung der oberflächennahen Substratschicht, die für aus dem Innern des Glassubstrats nachwandernde Ionen undurchlässig ist. Somit können beispielsweise die verschiedenen Schichten einer Dünnschichtsolarzelle oder auch metallische Wärmeschutzschichten direkt auf die Glasoberfläche aufgebracht werden ohne eine zusätzliche Diffusionssperrschicht, wie im Stand der Technik genannt, aufbringen zu müssen.

Wird das beschriebene Verfahren in den Herstellungsprozess des Glassubstrats eingebunden, so kann eine Glaskorrosion von Anfang an reduziert werden.

Wird das erfindungsgemäße Verfahren erst vor der Weiterverarbeitung, z.B. der Beschichtung des Glassubstrats durchgeführt, so werden dabei während der Lagerung auftretende Verunreinigungen bzw. an der Oberfläche diffundierte Störionen entfernt, sodass für die Weiterverarbeitung eine frische Oberfläche bereitsteht. Dazu ist es auch von Vorteil, wenn die Säure vor der Temperaturbehandlung durch einen Spülvorgang von der Substratoberfläche entfernt wird. Durch den Spülvorgang werden eventuelle Ablagerungen von ausgefallenem Salz und somit eine Störung des transparenten Erscheinungsbildes des Glassubstrats verhindert.

Es hat sich als vorteilhaft herausgestellt, Zitronensäure oder Adipinsäure oder Schwefelsäure in einer wässerigen Lösung mit einer Konzentration zwischen 0,1 Volumen % und 30 Volumen %, bevorzugt zwischen einem 1 Volumen % und 20 Volumen % zu verwenden und diese Säure bevorzugt zwischen 1 Sekunde und 1.000 Sekunden, besonders bevorzugt zwischen 10 Sekunden und 100 Sekunden, auf die Glasoberfläche einwirken zu lassen.

Die nachfolgende Temperaturbehandlung des Glassubstrats wirkt lediglich auf die oberflächennahe Schicht des Substrats in einer Eindringtiefe von 10 µm, bevorzugt mit nur 1 µm Eindringtiefe, ein. Durch diese geringe Eindringtiefe der Temperaturbehandlung wird einerseits ein Ausheilen der Oberflächenschicht des Glassubstrats bewirkt und andererseits eine erhöhte Diffusion von Ionen aus dem Inneren des Glassubstrats an die Oberfläche vermieden. Die Temperaturbehandlung ist durch eine Einwirkung von Plasma auf die Substratoberfläche auszuführen. Als Plasmaquelle werden Niederdruckplasmen eingesetzt, die durch Hochfrequenzstrahlung, insbesondere bei einer Elektronen-Zyklotron-Resonanzfrequenz, angeregt werden.

Die auf die Substratoberfläche auftreffende Energiedichte (Energie pro Flächeneinheit) des Plasmas beträgt zwischen 0,1 MJ/m² und 3 MJ/m², besonders bevorzugt zwischen 0,9 MJ/m² und 1,5 MJ/m².

Die grundlegenden Abläufe und Ausführungsbeispiele des erfindungsgemäßen Verfahrens und eines erfindungsgemäßen Glassubstrats sind in den Zeichnungen beispielhaft dargestellt und werden anhand der nachfolgenden Beschreibung näher erläutert. Es zeigen:
- Fig. 1: Abläufe an der Grenzschicht zwischen Glassubstrat und Atmosphäre bzw. Säure in vereinfachter schematischer Darstellung;
- Fig. 2: einen schematischen Reaktionsablauf während der erfindungsgemäßen Verfahrensschritte in schematischer Darstellung;
- Fig. 3: ein Ausführungsbeispiel des erfindungsgemäßen Verfahrens als Ablaufdiagramm, wobei die Wärmebehandlung mit Laser- und Mikrowellenstrahlung sind nicht erfindungsgemäß. und
- Fig. 4: ein Ausführungsbeispiel eines erfindungsgemäßen Glassubstrats für eine Dünnschichtsolarzelle.

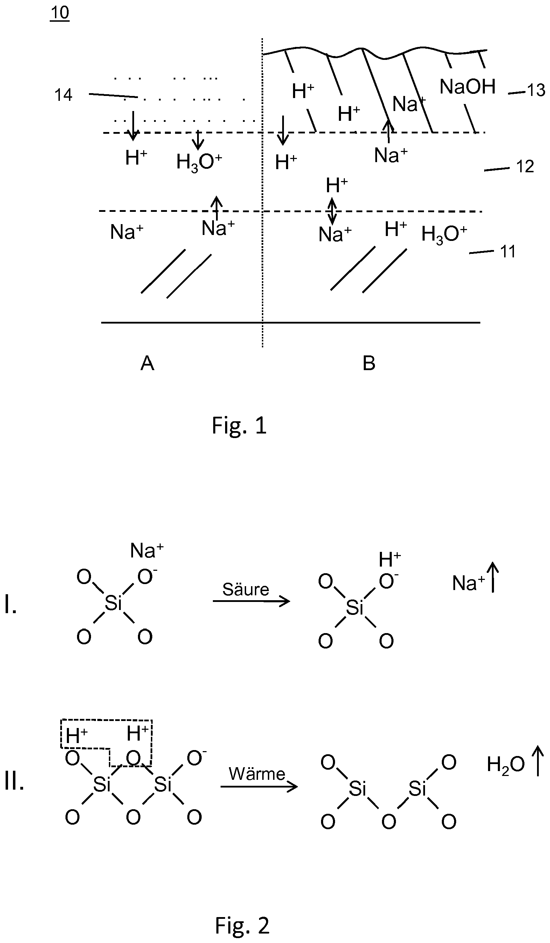

In Fig. 1 ist auf der linken Seite, die mit A bezeichnet ist, eine Glasanordnung 10 dargestellt, in der sich ein Glassubstrat 11 in einer atmosphärischen Umgebung 14 befindet. An der Oberfläche eines Glassubstrats 11 bildet sich dabei in natürlicher Weise eine Gelschicht 12 von z.B. ca. 50nm Dicke aus. Dort lagern sich OH-Gruppen in Form von chemisorbiertem Wasser an die Siliciumoxid-Struktur des Glassubstrats an. Darüber wird ein Wasserfilm durch physisorbiertes Wasser ausgebildet, das z.B. durch Wasserstoffbrückenbindungen an die Siliciumoxid-Struktur anbindet. Zusätzlich sind auch Alkali- und Erdalkaliionen, insbesondere Natriumionen, aber auch Kalium-, Magnesium- und Calcium-Ionen in der Gelschicht 12 vorhanden, die durch Diffusion aus dem Glassubstrat 11 in die Gelschicht 12 gelangen.

Wird nun, wie im Bereich B der Fig. 1 dargestellt, eine Säure 13 auf die Oberfläche des Glassubstrats 11 aufgebracht, wird die Konzentration an Protonen (H⁺) in der Gelschicht 12 erhöht. Vermehrt werden anstatt der Alkali- und Erdalkaliionen, die eine hohe Diffusionsgeschwindigkeit in der Gelschicht aufweisen, die aus der Säure stammenden H⁺-Ionen in die Silicium-Struktur des Glases eingelagert. Die Konzentration der Alkali- und Erdalkaliionen nimmt in Form eines Gradienten vom Substratinneren zur Oberfläche hin ab und es bildet sich eine Alkali-/Erdalkaliionen-arme Zone im oberflächennahen Bereich des Glassubstrats 11 aus.

Die Alkali-/Erdalkaliionen wandern im Gegenzug in die Säure und bilden dort z.B. Natriumhydroxyd, das durch einen anschließenden Spülvorgang entfernt wird.

Fig. 2 zeigt in Bereich I den chemischen Ablauf des ersten Verfahrensschritts am Beispiel von Natriumionen, die sich an die Siliciumoxid-Struktur des Glases anlagern. Durch die Zugabe der Säure treten vermehrt H⁺-Ionen der Gelschicht 12 in der oberflächennahen Zone des Glassubstrats 11 auf und ersetzen dort das Natriumion. Im zweiten Verfahrensschritt, siehe Bereich II, wird die Oberfläche des Glassubstrats erwärmt. Dabei werden die eingelagerten Ionen als Wasser ausgedampft. Zurück bleibt eine verdichtete Silanolschicht, die selbst ionenarm ist und eine Diffusion von Ionen aus dem Glassubstrat dauerhaft verhindert.

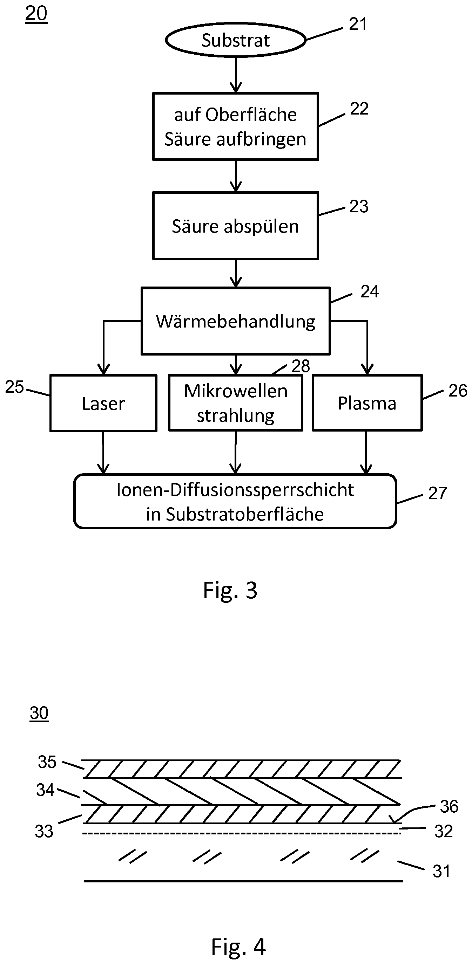

In Fig. 3 zeigt ein Ablaufdiagramm des Verfahrens. Als Ausgangsprodukt liegt ein Glassubstrat, beispielsweise ein Flachglas, insbesondere ein Floatglas oder Gussglas oder auch ein Hohlglas, vor.

In einem ersten Verfahrensschritt 22 wird Säure, insbesondere eine schwache organische, komplexbildende Säure mit einem pH-Wert von ca. 3, auf dieses Substrat aufgebracht. Dies kann beispielsweise direkt nach der Herstellung des Glassubstrats oder im Rahmen eines Waschvorgangs am Beginn des Beschichtungsprozesses stattfinden. Dabei wird die Säure gleichmäßig auf mindestens eine Oberfläche des Glassubstrats aufgebracht und für eine vorbestimmte Verweildauer, die beispielsweise zwischen 1 Sekunde und 1000 bevorzugt aber zwischen 10 und 100 Sekunden beträgt, dort belassen. Anschließend wird die Säure im Verfahrensschritt 23 abgespült und die darin enthaltenen Reaktionsprodukte werden abgespült.

Im nachfolgenden Verfahrensschritt 24 wird eine oberflächennahe Schicht des Glassubstrats erwärmt. Die Wärmebehandlung wird dabei so ausgeführt, dass zugeführte Energie bevorzugt nur bis zu 10 µm, besonders bevorzugt bis zu 1 µm, in das Glassubstrat eindringt und den Wassergehalt in dieser Randschicht reduziert. Die Wärmebehandlung 24 wird durch das Einwirken eines Plasmas, siehe Schritt 26, auf die Substratoberfläche durchgeführt werden.

Nach beispielsweise 15 Minuten ist diese selektive Trocknung der Substratoberfläche in ausreichendem Maße erfolgt. Die Grenzschicht des Glassubstrats zur Oberfläche hin ist nun als Ionen-Diffusionssperrschicht 27 ausgebildet und kann ohne zusätzliche Aufbringung einer Diffusionssperrschicht z.B. als Träger für Dünnschichtsolarzellen oder für vorspannbare Sonnenschutzschichten oder für Schichten mit niedriger Emissivität verwendet werden.

Messungen an einem mit dem beschriebenen Verfahren behandelten Glassubstrat haben eine Reduzierung der Ionendiffusion, insbesondere von Na-Ionen, um mehr als eine Größenordnung gezeigt.

Fig. 4 zeigt eine erfindungsgemäße Dünnschichtsolarzelle 30 mit einem Glassubstrat 31, deren oberflächennaher Bereich 32 eine Ionen-Diffusionsschicht ausbildet. Beispielhaft ist eine metallisch leitende Schicht 33 direkt auf die Oberfläche 36 des Glassubstrats 31 aufgebracht. Diese erste metallische Schicht 33 bildet den Rückkontakt. Darüber befindet sich eine Absorberschicht 34 sowie eine den Frontkontakt bildende zweite metallhaltige Schicht 35. Durch die Behandlung des Glassubtrats mit dem vorgenannten Verfahren muss keine zusätzliche Ionen-Diffusionssperrschicht, z.B. durch Beschichtung, aufgebracht werden.

Alle beschriebenen und/oder bezeichneten Merkmale können im Rahmen der Erfindung vorteilhaft miteinander kombiniert werden. Die Erfindung ist nicht auf die beschriebenen Ausführungsbeispiele beschränkt.

## Patentansprüche

1. Verfahren zur Ausbildung einer Ionen-Diffusionssperrschicht in einer Oberfläche eines Glassubstrats mit den Verfahrensschritten:
- Aufbringen einer Säure auf die Substratoberfläche (22) und
- anschließende Temperaturbehandlung (24) der Substratoberfläche,
wobei die Säure vor der Temperaturbehandlung durch einen Spülvorgang (23) von der Substratoberfläche entfernt wird,
wobei die Temperaturbehandlung (24) auf eine oberflächennahe Schicht des Substrats bis zu einer Eindringtiefe von 10µm gerichtet ist,
wobei die Temperaturbehandlung (24) durch eine Plasmaeinwirkung auf die Substratoberfläche ausgeführt wird,
wobei das Plasma bei Niederdruck durch Hochfrequenzstrahlung angeregt wird und
wobei das Plasma auf der Oberfläche des Glassubstrats eine Energiedichte zwischen 0,1 und 3 MJ/m² aufweist.

2. Verfahren nach Anspruch 1,
**dadurch gekennzeichnet,**
**dass** Citronensäure oder Adipinsäure oder Schwefelsäure als Säure verwendet werden.

3. Verfahren nach Anspruch 1 oder 2,
**dadurch gekennzeichnet,**
**dass** die Säure in einer Konzentration zwischen 0,1 Volumen % und 30 Volumen %, bevorzugt zwischen 1 Volumen % und 20 Volumen %, in einer wässerigen Lösung vorliegt.

4. Verfahren nach einem der Ansprüche 1 bis 3,
**dadurch gekennzeichnet**,
die Verweildauer der Säure auf der Substratoberfläche zwischen 1s und 1000s, bevorzugt zwischen 10s und 100s,
beträgt.

5. Verfahren nach einem der Ansprüche 1 bis 4,
**dadurch gekennzeichnet,**
**dass** die Temperaturbehandlung (24) auf eine Oberflächenschicht des Substrats bis zu einer Eindringtiefe von 1µm gerichtet ist.

6. Verfahren nach Anspruch 1,
**dadurch gekennzeichnet,**
**dass** das Plasma auf der Oberfläche des Glassubstrats eine Energiedichte zwischen bevorzugt 0,9 MJ/m² und 1,5 MJ/m² aufweist.

7. Verfahren nach einem der Ansprüche 1 bis 6,
**dadurch gekennzeichnet,**
**dass** das Glas ein Flachglas, insbesondere ein Floatglas oder Gussglas, oder ein Hohlglas ist.

8. Glassubstrat (31), insbesondere für eine Dünnschichtsolarzelle (30), in dem eine Diffusionssperrschicht (32) gemäß einem der Ansprüche 1 bis 7 ausgebildet ist.

## Claims

1. Method for forming an ion diffusion barrier layer in a surface of a glass substrate with the method steps:
- application of an acid to the substrate surface (22) and
- subsequent temperature treatment (24) of the substrate surface, the acid being removed from the substrate surface by a rinsing operation (23) before the temperature treatment,
wherein the temperature treatment (24) is directed at a layer of the substrate near the surface to a depth of penetration of 10 µm,
wherein the temperature treatment (24) is carried out through the action of a plasma on the substrate surface,
wherein the plasma is excited at low pressure by high-frequency radiation and wherein the plasma on the surface of the glass substrate has an energy density of between 0.1 and 3 MJ/m².

2. Method according to claim 1,
**characterised in that** citric acid or adipic acid or sulphuric acid is used as the acid.

3. Method according to claim 1 or 2,
**characterised in that** the acid is present in a concentration of between 0.1 vol. % and 30 vol. %, preferably of between 1 vol. % and 20 vol. %, in an aqueous solution.

4. Method according to one of claims 1 to 3,
**characterised in that** the time the acid spends on the substrate surface is between 1 s and 1000 s, preferably between 10 s and 100 s.

5. Method according to one of claims 1 to 4,
**characterised in that** the temperature treatment (24) is directed at a surface layer of the substrate to a depth of penetration of 1 µm.

6. Method according to claim 1,
**characterised in that** the plasma on the surface of the glass substrate has an energy density of between preferably 0.9 MJ/m² and 1.5 MJ/m².

7. Method according to one of claims 1 to 6,
**characterised in that** the glass is a flat glass, in particular a float glass or cast glass, or a hollow glass.

8. Glass substrate (31), in particular for a thin film solar cell (30), in which is formed a diffusion barrier layer (32) according to one of claims 1 to 7.

## Revendications

1. Procédé de formation d'une couche barrière de diffusion ionique dans une surface d'un substrat en verre, comprenant les étapes de procédé suivantes :
- dépôt d'un acide sur la surface du substrat (22) et
- traitement thermique consécutif (24) de la surface du substrat,
dans lequel l'acide est éliminé de la surface du substrat par une opération de rinçage (23) avant le traitement thermique,
dans lequel le traitement thermique (24) est dirigé sur une couche du substrat proche de la surface jusqu'à une profondeur de pénétration de 10 µm,
dans lequel le traitement thermique (24) est exécuté par l'action d'un plasma sur la surface du substrat,
dans lequel le plasma est excité à pression négative par rayonnement haute fréquence et
dans lequel le plasma présente une densité énergétique comprise entre 0,1 et 3 MJ/m² sur la surface du substrat en verre.

2. Procédé selon la revendication 1,
**caractérisé**
**en ce que** l'acide citrique ou l'acide adipique ou l'acide sulfurique sont utilisés comme acides.

3. Procédé selon la revendication 1 ou 2,
**caractérisé**
**en ce que** l'acide se présente dans une solution aqueuse en une concentration entre 0,1 % en volume et 30 % en volume, de préférence entre 1 % en volume et 20 % en volume.

4. Procédé selon l'une des revendications 1 à 3,
**caractérisé**
**en ce que** le temps de résidence de l'acide sur la surface du substrat est compris entre 1 s et 1000 s, de préférence entre 10 s et 100 s.

5. Procédé selon l'une des revendications 1 à 4,
**caractérisé**
**en ce que** le traitement thermique (24) est dirigé sur une couche de surface du substrat jusqu'à une profondeur de pénétration de 1 µm.

6. Procédé selon la revendication 1,
**caractérisé**
**en ce que** le plasma présente à la surface du substrat en verre une densité énergétique comprise entre de préférence 0,9 MJ/m² et 1,5 MJ/m².

7. Procédé selon l'une des revendications 1 à 6,
**caractérisé**
**en ce que** le verre est un verre plat, notamment un verre trempé ou un verre coulé, ou un verre creux.

8. Substrat en verre (31), en particulier pour une cellule solaire à couche mince (30), dans lequel une couche barrière de diffusion (32) selon l'une des revendications 1 à 7 est formée.
